# EUROPÄISCHE PATENTSCHRIFT

(11) **EP 0 955 188 B1**
(45) Veröffentlichungstag und Bekanntmachung des Hinweises auf die Patenterteilung: **07.07.2004**
(21) Anmeldenummer: 99107710.8
(22) Anmeldetag: 17.04.1999
(51) Int. Cl.: B60H 1/34

(54) **Belüftungsdüse für Fahrzeuge**
Venting nozzle for vehicles
Buse d'aération pour véhicules

(30) Priorität: 07.05.1998 DE 19820333
(43) Veröffentlichungstag der Anmeldung: 10.11.1999
(73) Patentinhaber: DaimlerChrysler AG, 70567 Stuttgart (DE)
(72) Erfinder: Arold, Klaus, 71069 Sindelfingen (DE)

(56) Entgegenhaltungen:
- EP-A- 0 368 017
- EP-A- 0 424 879
- EP-A- 0 596 446
- WO-A-94/00310
- DE-A- 3 509 537
- DE-A- 4 300 910
- DE-C- 4 327 266
- DE-C- 19 529 451
- US-A- 4 938 033

## Beschreibung

Die Erfindung betrifft eine Belüftungsdüse für Fahrzeuge der im Oberbegriff des Patentanspruchs 1 angegebenen Gattung.

Bei einer bekannten Belüftungsdüse dieser Art (DE 195 29 451 C1) sind die beiden Verstelleinrichtungen für Haupt- und Nebenkanal als zweiflügelige, mittig gelagert Luftklappen ausgebildet, die über ein gemeinsames Steuerorgan eingestellt werden. Zur Erzielung einer gewünschten Öffnungscharakteristik der Nebenklappe ist diese mit einer Kulisse in einem schwenkbar angeordneten Steuersegment gekoppelt, und das Steuersegment ist mit Hauptklappe über eine Stellstange mit einem manuell zu bedienenden Steuerorgan verbunden. Die Ausbildung der Kulisse im Steuersegment ist so getroffen, daß bei Betätigen des Stellorgans aus der die Schließung des jeweils zugeordneten Kanals bewirkenden ersten Endstellung der Luftklappen heraus die Nebenklappe den Nebenkanal solange völlig verdeckt hält, bis die Hauptklappe in etwa ihre den Hauptkanal völlig freigebende Mittenposition erreicht hat.

Bei einer ebenfalls bekannten Belüftungsdüse (DE 43 27 266 C1) sind die Verstelleinrichtungen für die beiden Kanäle als zweiflügelige, mittig gelagerte Luftklappen ausgebildet, die einerseits durch ein manuelles Bedienorgan und andererseits vom Fahrerplatz aus fernbedienbar sind, um eine Entfrosterfunktion einzustellen. Zwischen beiden Luftklappen sind Kopplungsmittel vorgesehen, durch die einerseits die Nebenklappe mit der Öffnungsbewegung der Hauptklappe verschließbar und andererseits die Hauptklappe mit der Öffnungsbewegung der Nebenklappe verschließbar ist. Durch die Positionierung der Belüftungsdüsen im Armaturenbrett ist die Ausblasöffnung des Nebenkanals zur Entfeuchtung und Entfrostung von Seitenscheiben und die Ausblasöffnung des Hauptkanals zum direkten Anblasen der Frontpassagiere bestimmt, wobei die Ausblasrichtung noch durch vertikal und horizontal sich erstreckende Schwenklamellen seitlich und nach oben und unten verstellt werden kann.

Der Erfindung liegt die Aufgabe zugrunde, eine Belüftungsdüse der eingangs genannten Art so zu verbessern, daß über den Nebenkanal eine ausreichend wirksame indirekte Belüftung der Fahrgastzelle erreichbar ist, die unabhängig von einer über den Hauptkanal vorgenommenen Direktbelüftung der Fahrzeugpassagiere einstellbar ist.

Die Aufgabe ist erfindungsgemäß durch die Merkmale im Patentanspruch 1 gelöst.

Die erfindungsgemäße Belüftungsdüse hat den Vorteil, daß durch die Ausbildung der Verstelleinrichtung für den Nebenkanal als Luftabschöpfklappe auch bei teilweise geöffnetem Hauptkanal eine ausreichend große Luftströmung für den Nebenkanal abgezweigt wird, die eine ausreichend intensive indirekte Belüftung der Fahrgastzelle ermöglicht. Durch die von der Verstelleinrichtung für den Hauptkanal unabhängige Bedienungsmöglichkeit der Luftabschöpfklappe ist eine feinfühlige Dosierung der aus dem Nebenkanal ausströmenden Luftmenge möglich.

Vorteilhafte Ausführungsformen der erfindungsgemäßen Belüftungsdüse mit zweckmäßigen Ausgestaltungen und Weiterbildungen der Erfindung ergeben sich aus den weiteren Ansprüchen.

Die Erfindung ist anhand eines in der Zeichnung dargestellten Ausführungsbeispiels im folgenden näher beschrieben. Dabei zeigt die Zeichnung einen Längsschnitt einer im Armaturenbrett einer Fahrgastzelle angeordneten Belüftungsdüse in schematischer Darstellung.

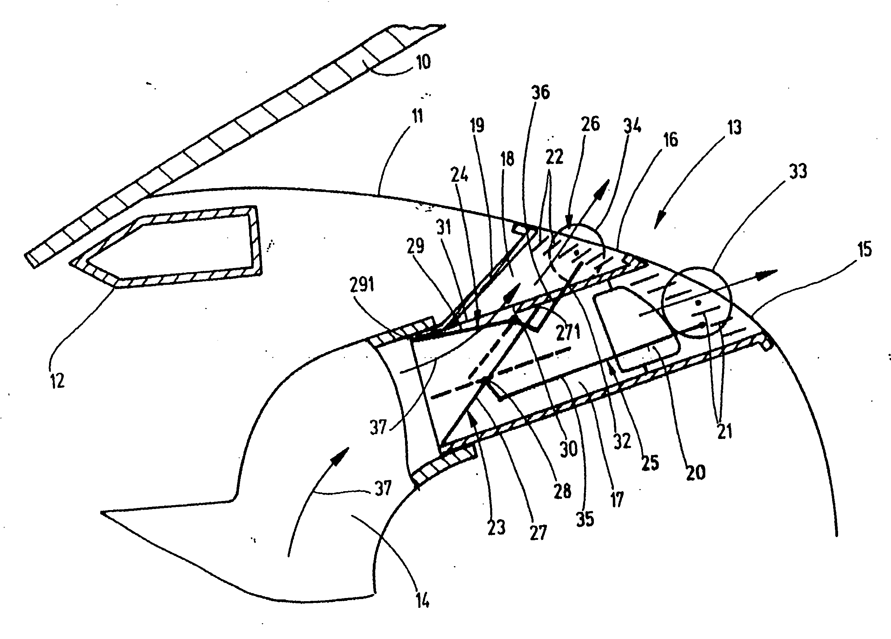

In Fig. 1 ist ausschnittweise eine Frontscheibe 10 und ein Armaturenbrett 11 einer Fahrgastzelle eines Fahrzeugs schematisch skizziert. Mit 12 ist ein quer zur Fahrgastzelle verlaufender Hohlprofilträger bezeichnet, an dem die Frontscheibe 10 und das Armaturenbrett 11 festgelegt sind. In das Armaturenbrett 11 ist eine Belüftungsdüse 13 eingesetzt und an einen innerhalb des Armaturenbretts 11 verlaufenden Belüftungsschacht 14 angeschlossen, der mit Frischluft oder temperierter Luft beaufschlagbar ist. Die bündig in das Armaturenbrett 11 eingesetzte Belüftungsdüse 13 weist ein Düsengehäuse 19 auf, das zwei in der Konturenebene des Armaturenbretts 11 liegende, voneinander getrennte Ausblasöffnungen 15 und 16 besitzt. In der Ausblasöffnung 15, die für die direkte Belüftung der Fahrgastzelle vorgesehen ist, mündet ein im Gehäuse 19 ausgebildeter Hauptluftkanal 17 und in der Ausblasöffnung 16, die für eine indirekte Belüftung der Fahrgastzelle vorgesehen ist, mündet ein Nebenkanal 18, der von dem Hauptkanal 17 abzweigt. Zur Einstellung der Ausblasrichtung sind im Hauptkanal 17 ein Satz vertikal ausgerichteter Schwenklamellen 20 und ein Satz horizontal ausgerichteter Schwenklamellen 21 in Luftströmungsrichtung gesehen hintereinander angeordnet. Durch Schwenken der vertikalen Schwenklamellen 20 kann die Ausblasrichtung seitlich und durch Schwenken der horizontalen Schwenklamellen kann die Ausblasrichtung nach oben und unten verändert werden.

Im Nebenkanal 18 sind unmittelbar in der Ausblasöffnung 16 eine Mehrzahl von parallelen, horizontal ausgerichteten Schwenklamellen 22 angeordnet, mittels welcher die Ausblasrichtung der Ausblasöffnung 16 nach oben und unten abgelenkt werden kann.

Im Abzweigbereich des Nebenkanals 18 vom Hauptkanal 17 sind im Hauptkanal 17 zwei Luftverstelleinrichtungen 23,24 angeordnet, die über separate Steuerorgane 25,26 eingestellt werden können, um die durch Hauptkanal 17 und Nebenkanal 18 strömenden Luftmengen vorzugeben. Die dem Hauptkanal 17 zugeordnete Verstelleinrichtung 23 ist dabei als zweiflügelige Luftklappe 27 ausgebildet, die um eine quer zur Hauptachse des Hauptkanals 17 ausgerichtete, im Gehäuse 19 festgelegte Schwenkachse 28 schwenkbar ist. Die Luftklappe 27 ist dabei so konzipiert und mit ihrer Schwenkachse 28 ausgerichtet, daß sie unterhalb der Nebenkanalabzweigung 31 liegt und in ihrer den Hauptkanal 18 sperrenden Schließstellung mit ihrer oberen Klappenkante 271 an der die Nebenkanalabzweigung 31 tragende Kanalwand 32 des Hauptkanals 17 anliegt, und zwar stromabwärts der Nebenkanalabzweigung 31.

Die Verstelleinrichtung 24 für den Nebenkanal 18 ist als einflügelige Luftklappe 29 ausgebildet, die um eine zur Schwenkachse 28 parallele Schwenkachse 30 schwenkbar ist. Die Luftklappe 29 ist dabei so konzipiert, daß sie eine Luftabschöpffunktion zum Abschöpfen von Luft aus dem Hauptkanal 17 ausüben kann. Hierzu ist die Schwenkachse 30 an der einen Klappenkante der Luftklappe 29 parallel zu dieser verlaufend angeordnet und an der die Nebenkanalabzweigung 31 aufweisende Kanalwand 32 des Hauptkanals 17 stromabwärts der Nebenkanalabzweigung 31 festgelegt, vorzugsweise unmittelbar an der in Luftströmungsrichtung gesehen hinteren Begrenzungskante der Nebenkanalabzweigung 31. Die Luftklappe 29 ist dabei so angeordnet, daß sie bei ihrer Öffnungsbewegung mit ihrer von der Schwenkachse 30 abgekehrten vorderen Klappenkante 291 in den Hauptkanal 17 hineinschwenkt und in ihrer maximalen Offenstellung einen spitzen Winkel zur Ebene der Nebenkanalabzweigung 31 einschließt.

Die Steuerorgane 25,26 für jede Luftklappe 27 und 29 sind gleich ausgebildet und weisen jeweils ein manuell zu betätigendes Rändelrad 33 bzw. 34 auf, das geringfügig über die Kontur des Armaturenbretts 11 vorsteht und mit einem Finger gegriffen werden kann. Die Drehbewegung des Rändelrades 33 bzw. 34 wird über einen Gelenkhebel 35 bzw. 36 in eine Schwenkbewegung der zugeordneten Luftklappe 27 bzw. 29 umgesetzt. In der Zeichnung sind die beiden Luftklappen 27,28 in ihrer Schließstellung ausgezogen und in ihrer maximalen Offenstellung strichliniert dargestellt. Jede Luftklappe 27 bzw. 29 kann in diesem Bereich mittels des Rändelrads 33 bzw. 34 unabhängig von der anderen Luftklappe 29 bzw. 27 geschwenkt werden. Die Luftströmung im Belüftungsschacht 14 und durch Haupt- und Nebenkanal 17,18 im Gehäuse 19 der Belüftungsdüse 13 ist durch Pfeile 37 angedeutet.

## Patentansprüche

1. Belüftungsdüse (13) für Fahrzeuge mit einem Haupt- (17) und einem davon abzweigenden Nebenkana (18), die in einem Düsengehäuse (19) ausgebildet sind und in zwei voneinander getrennten Ausblasöffnungen (15, 16) munden, und mit jeweils einem der Kanäle zugeordneten, im Bereich der Nebenkanalabzweigung (31) angeordneten, steuerbaren Verstelleinrichtungen (23, 24) zum Einstellen der zu den Ausblasöffnungen (15, 16) strömenden Luftmengen,
**dadurch gekennzeichnet,**
**dass** die Verstelleinrichtungen (23, 24) im Bereich der Nebenkanalabzweigung (31) so angeordnet sind, dass die den Hauptkanal (17) sperrende verstelleinrichtung (23) diesen stromabwärts der Nebenkanalabzweigung (31) sperrt und die dem Nebenkanal (18) zugeordnete Verstelleinrichtung (24) als Luftklappe mit Luftabschöpffunktion aus dem Hauptkanal (17) ausgebildet ist und wobei für jede Verstelleinrichtung (23, 24) ein separates Steuerorgan (25, 26) vorgesehen ist.

2. Düse nach Anspruch 1,
**dadurch gekennzeichnet,**
**daß** die Luftklappe (19) für den Nebenkanal (18) einflügelig ausgebildet und um eine an oder nahe ihrer einen Klappenkante dazu parallel verlaufende Schwenkachse (30) an der die Nebenkanalabzweigung (31) aufweisenden Kanalwand (32) des Hauptkanals (17) schwenkbar derart festgelegt ist, daß sie zum Öffnen der Nebenkanalabzweigung (31) mit ihrer von der Schwenkachse (30) abgekehrten Klappenkante (291) in den Hauptkanal (17) hineinschwenkt.

3. Düse nach Anspruch 1 oder 2,
**dadurch gekennzeichnet,**
**daß** die dem Hauptkanal (17) zugeordnete Verstelleinrichtung (23) als zweiflügelige Luftklappe (27) ausgebildet ist, die um eine quer zur Achse des Hauptkanals (17) ausgerichtete Schwenkachse (28) schwenkbar im Hauptkanal (17) gehalten ist.

4. Düse nach Anspruch 3,
**dadurch gekennzeichnet,**
**daß** die Schwenkachse (28) der dem Hauptkanal (17) zugeordneten Luftklappe (27) unterhalb der Nebenabzweigung (31) so festgelegt ist, daß die Luftklappe (27) in ihrer den Hauptkanal (17) sperrenden Schließstellung mit ihrer einen Klappenkante (271) stromabwärts der Nebenkanalabzweigung (31) an der die Nebenkanalabzweigung (31) tragenden Kanalwand (32) des Hauptkanals (17) anliegt.

5. Düse nach einem der Ansprüche 1 - 4,
**dadurch gekennzeichnet,**
**daß** die Ausblasöffnungen (15,16) im Düsengehäuse (19) mit voneinander abweichenden Ausblasrichtungen angeordnet sind.

6. Düse nach Anspruch 5,
**gekennzeichnet durch**
eine solche Positionierung in einem Armaturenbrett (11) einer Fahrgastzelle eines Fahrzeugs, daß die eine Ausblasöffnung (15) eine auf die Frontpassagiere gerichtete direkte Ausblasrichtung und die andere Ausblasöffnung (16) eine in den Kopfbereich der Fahrgastzelle gerichtete indirekte Ausblasrichtung erhält.

## Claims

1. An air outlet (13) for vehicles having a main duct (17) and an auxiliary duct (18) branching off said main duct (17) which are formed in an outlet housing (19) and which discharge at two separate outlet openings (15, 16) and having controllable adjusting devices (23, 24) positioned in the area of the auxiliary duct branch (31) for adjusting the air volumes flowing to the outlet openings (15, 16), each of said adjusting devices (23, 24) being associated with one of the ducts,
**characterised in that**
the adjusting devices (23, 24) are positioned in the area of the auxiliary duct branch (31) such that the adjusting device (23) blocking the main duct (17) blocks it downstream of the auxiliary duct branch (31) and the adjusting device (24) associated with the auxiliary duct (18) is designed as a damper with the function of removing air from the main duct (17), a separate control organ (25, 26) being provided for each adjusting device (23, 24).

2. An outlet in accordance with claim 1,
**characterised in that**
the damper (29) for the auxiliary duct (18) is designed with a single blade and is fixed to the duct wall (32) of the main duct (17) featuring the auxiliary duct branch (31) and is able to pivot about an axis of pivoting (30) on or near one of its damper edges running parallel thereto in such a manner that, in order to open the auxiliary duct branch (31), the damper edge (291) facing away from the axis of pivoting (30) pivots into the main duct (17).

3. An outlet in accordance with claim 1 or 2,
**characterised in that**
the adjusting device (23) associated with the main duct (17) is designed as a two-bladed damper (27) which is held in the main duct (17) such that it is able to pivot about an axis of pivoting (28) oriented at an angle to the axis of the main duct (17).

4. An outlet in accordance with claim 3,
**characterised in that**
the axis of pivoting (28) of the damper (27) associated with the main duct (17) is fixed below the auxiliary branch (31) in such a manner that in its closing position blocking the main duct (17) one damper edge (271) of the damper (27) lies adjacent to the duct wall (32) of the main duct (17) which bears the auxiliary duct branch (31) downstream of the auxiliary duct branch (31).

5. An outlet in accordance with one of claims 1 to 4,
**characterised in that**
the outlet openings (15, 16) are positioned in the outlet housing (19) with differing airflow directions.

6. An outlet in accordance with claim 5,
**characterised by**
a position in an instrument panel (11) of a passenger compartment of a vehicle such that one outlet opening (15) has a direct airflow direction directed towards the front passengers and the other outlet opening (16) has an indirect airflow direction directed at the head area of the passenger compartment.

## Revendications

1. Buse d'aération (13) pour véhicules comportant un canal principal (17) et un canal auxiliaire (18) s'en détachant, formés dans un boîtier de buse (19) et débouchant dans deux ouvertures de sortie (15, 16) séparées l'une de l'autre et équipés de dispositifs de réglage (23, 24) pouvant être commandés, associés à chaque fois à l'un des canaux, disposés dans la zone de l'embranchement du canal auxiliaire (31) pour régler la quantité d'air s'écoulant des ouvertures de sortie (15, 16), **caractérisée en ce que** les dispositifs de réglage (23, 24) dans la zone de l'embranchement du canal auxiliaire (31) sont disposés de telle manière que le dispositif de réglage (23) obturant le canal principal (17) obture celui-ci en aval de l'embranchement du canal auxiliaire (31) et que le dispositif de réglage (24) associé au canal auxiliaire (18) est formé en tant que clapet d'aération avec une fonction d'extraction d'air hors du canal principal (17), un organe de commande séparé (25, 26) étant prévu pour chaque dispositif de réglage (23, 24).

2. Buse selon la revendication 1, **caractérisée en ce que** le clapet d'aération (19) du canal auxiliaire (18) est constitué avec un seul volet et est immobilisé de façon à pouvoir pivoter autour d'un axe de pivotement (30) s'étendant parallèlement contre ou à proximité de son arête de clapet sur la paroi de canal (32) du canal principal (17) présentant l'embranchement de canal auxiliaire (31), de manière telle que pour ouvrir l'embranchement auxiliaire (31), il pivote dans le canal principal (17) par son arête de clapet (291) détournée de l'axe de pivotement (30).

3. Buse selon la revendication 1 ou 2, **caractérisée en ce que** le dispositif de réglage (23) associé au canal principal (17) est constitué en tant que clapet d'aération (27) à deux volets maintenu dans le canal principal (17) de façon à pouvoir pivoter autour d'un axe de pivotement (28) aligné transversalement par rapport à l'axe du canal principal (17).

4. Buse selon la revendication 3, **caractérisée en ce que** l'axe de pivotement (28) du clapet d'air (27) associé au canal principal (17) est immobilisé sous l'embranchement auxiliaire (31) de manière telle que le clapet d'aération (27), en sa position de fermeture obturant le canal principal (17), s'applique par son arête de clapet (271) en aval de l'embranchement de canal auxiliaire (31) contre la paroi de canal (32) du canal principal (32) comportant l'embranchement de canal auxiliaire (31).

5. Buse selon l'une quelconque des revendications 1 à 4, **caractérisée en ce que** les ouvertures de sortie (15, 16) dans le boîtier de buse (19) sont disposées en ayant des directions de sortie s'écartant l'une de l'autre.

6. Buse selon la revendication 5, **caractérisée par** un positionnement dans une paroi de tableau de bord (11) de l'habitacle d'un véhicule tel que l'un des orifices de soufflage (15) reçoit une direction de soufflage dirigée directement vers les passagers de l'avant et l'autre orifice de soufflage (16) une direction de soufflage dirigée indirectement vers la zone de tête de l'habitacle.
